# EUROPEAN PATENT APPLICATION

(11) **EP 4 636 595 A1**
(43) Date of publication of application: **22.10.2025**
(21) Application number: 25169696.9
(22) Date of filing: 10.04.2025
(51) Int. Cl.: G06F 11/14

(54) **INTELLIGENT APPLICATION RESTORATION IN CONTAINERIZED ENVIRONMENTS**

(30) Priority: 17.04.2024 US 202418637828
(71) Applicant: NetApp, Inc., San Jose, CA 95128 (US)
(72) Inventor: Palani, Ashwin, San Jose, CA, 95128 (US); Wilson, Vivin Thomas, San Jose, CA, 95128 (US)
(74) Representative: Grünecker Patent- und Rechtsanwälte PartG mbB

(57) **Abstract**

Systems, methods, and software are disclosed herein for phased-in restoration of an application hosted on a cloud orchestration platform in various implementations. In an implementation, a computing apparatus receives a configuration for a multiphase restoration process for restoring resources of an application to a destination platform, the restoration occurring in phases. To implement the multiphase restoration process, the computing apparatus captures a backup of application data of the application, then restores a phase including selected resources of the application to the destination platform based on the backup and according to the configuration. The computing apparatus validates the selected resources at the destination platform, then restores a next phase to the destination platform based on the backup and according to the configuration.

## Description

### TECHNICAL FIELD

Aspects of the disclosure are related to the field of cloud orchestration platforms and particularly to data protection.

### BACKGROUND

Cloud orchestration platforms are centralized tools or systems for managing cloud environments, i.e., cloud-based resources and services. Such platforms streamline cloud operations and optimize resource utilization, including providing management services such as storage provisioning, configuration management, scaling, monitoring, and policy enforcement for cloud environments. In particular, Kubernetes is a container orchestration platform for cloud, on-premises, and hybrid-cloud environments that automates the deployment, scaling, and management of containerized applications across clusters of nodes. In a typical architecture, an application executing on a Kubernetes (K8s) cluster is a containerized workload that collectively provides a specific functionality or service.

Disaster recovery and business continuity are critical considerations in the realm of cloud orchestration platforms. In the context of Kubernetes environments, an important aspect of disaster recovery involves application backup and restoration mechanisms. These mechanisms typically entail the periodic capture and storage of application data and configurations to enable rapid recovery in the event of data loss or system failures. Additionally, application mirroring also plays an important role in enhancing resilience and redundancy within Kubernetes environments. Mirroring involves replicating data and resources in real-time or near-real-time across multiple geographical locations or availability zones, thereby reducing the risk of data loss and enhancing fault tolerance. This approach enables seamless failover and continuity of operations, even in the event of localized outages or infrastructure failures.

In the realm of disaster recovery and business continuity planning, organizations often establish specific objectives known as Recovery Point Objectives (RPOs) and Recovery Time Objectives (RTOs). RPOs delineate the maximum tolerable amount of data loss that an organization can sustain, while RTOs define the acceptable duration within which systems and applications must be restored following an incident. RPO and RTO metrics guide the design and implementation of backup, restoration, and mirroring strategies in Kubernetes clusters, ensuring that disaster recovery plans meet specific business needs and risk tolerance levels. The choice of tools and practices for backup and recovery, including snapshot management, data replication, and automated failover processes, are tailored to meet these objectives, ensuring that businesses can quickly recover from disruptions while minimizing data loss.

### OVERVIEW

Technology is disclosed herein for phased-in restoration of an application hosted on a cloud orchestration platform in various implementations. In an implementation, a computing apparatus receives a configuration for a multiphase restoration process for restoring resources of an application to a destination platform, the restoration occurring in phases. To implement the multiphase restoration process, the computing apparatus captures a backup of application data of the application, then restores a phase including selected resources of the application to the destination platform based on the backup and according to the configuration. The computing apparatus validates the selected resources at the destination platform and, based on the validation, restores a next phase to the destination platform based on the backup and according to the configuration.

In another implementation of the technology, a computing apparatus receives a configuration for a continuous restoration for mirroring an application to a destination platform. The continuous restoration includes phases comprising selected resources of the application resources. To implement the continuous restoration, the computing apparatus captures a backup of application data from the application, then restores a phase to the destination platform. The computing apparatus validates the selected resources at the destination platform and, based on the validation, restores a next phase to the destination platform based on the backup and according to the configuration.

This Overview is provided to introduce a selection of concepts in a simplified form that are further described below in the Detailed Description. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figures 1A, 1B, and 1C illustrate operational environments for phased-in restoration of an application in an implementation.
Figures 2A and 2B illustrate processes for phased-in restoration of an application in an implementation.
Figures 3A and 3B illustrate processes for configuring phased-in restoration of an application in an implementation.
Figure 4 illustrates an operational environment for a phased-in restoration of an application in an implementation.
Figures 5A and 5B illustrate workflows for phased-in restoration of an application in an implementation.
Figure 6 illustrates a multiphase restoration process for an application hosted on a source cluster in an implementation.
Figure 7 illustrates a continuous restoration process for an application hosted on a source cluster in an implementation.
Figure 8 illustrates a computing system suitable for implementing the various operational environments, architectures, processes, scenarios, and sequences discussed below with respect to the other Figures.

### DETAILED DESCRIPTION

Cloud orchestration platforms are centralized tools or systems for managing cloud environments, i.e., cloud-based resources and services. Such platforms streamline cloud operations and optimize resource utilization, including providing management services such as storage provisioning, configuration management, scaling, monitoring, and policy enforcement for cloud environments. Cloud orchestration platforms manage tools such as virtual machines or containers which in turn host applications and application workloads. As a hierarchy, applications execute on virtual machines or containers which are managed within clusters. Clusters are a group of interconnected computers or servers that work together to perform a specific task or provide a set of services. Clusters can include individual nodes, e.g., physical servers, virtual machines, or containers, which contribute computing resources, such as compute, memory, storage, and network bandwidth, to the cluster. Workloads, which encompass the tasks and processes that applications execute, are managed within the virtual machines or containers. Cloud orchestration platforms provide the automation, management, and coordination necessary to deploy, scale, and operate the underlying infrastructure, including the virtual machines, containers, clusters, and workloads, to support the applications effectively in cloud environments.

In the context of a cloud environment, where applications play a critical role in supporting mission-critical operations, data protection systems are essential for ensuring the reliability, availability, and continuity of services. These systems must be continually prepared for various scenarios, including failover and redundancy, to mitigate risks associated with data loss, downtime, and system failures. Failover is the process of automatically redirecting traffic or workload from a primary system (e.g., production site) to a secondary or backup system (e.g., disaster recovery site) when the primary system becomes unavailable or fails. Continuous restore is a data management approach for mirroring an application by continuously restoring application data in increments to maintain up-to-date copies of information in a system or environment. Continuous restore systems continuously monitor changes to the data and application at the primary site and restore backup archives in synchronously or asynchronously (e.g., near real-time or at frequent intervals) at a secondary location so that, in an emergent situation at the primary location, applications at the secondary location can be promoted to read/write status to take over mission-critical operations to minimize data loss and downtime.

Kubernetes is a container orchestration platform for cloud, on-premises, and hybrid-cloud environments that automates the deployment, scaling, and management of containerized applications across clusters of nodes. In a typical architecture, an application executing on a Kubernetes (K8s) cluster is a containerized workload that collectively provides a specific functionality or service. Kubernetes clusters may operate on physical servers (e.g., for an on-premises deployment), on cloud-based virtual machines, or on hybrid or multi-cloud environments. Applications are typically managed as a single entity in a Kubernetes environment: in a cluster, the multiple containers or services that collectively form an application are managed and treated as a unified entity. This unified management includes deploying, scaling, updating, and monitoring the application components as a cohesive unit, allowing for simplified administration and operation of complex distributed applications. When performing a backup of an application, Kubernetes treats the entire application, including all its associated resources such as pods, services, etc., as a unified entity. This means that backups are performed at the application level rather than according to individual components to ensure that all necessary resources and dependencies are captured in the backup process. In doing so, backup archives can be restored as a single unit, maintaining the application's integrity and consistency across deployments and environments.

Backing up the application data of a Kubernetes application involves capturing and preserving the state and configurations of the application's resources, including deployments, services, persistent volume claims (PVCs), config maps, secrets, and other objects, to a different or secondary storage location than the location of the original data. In some scenarios, an application may be backed up by capturing a backup archive of the application data for long-term data retention purposes. In addition to backup archives, an operational state or point-in-time representation of an application may be captured in snapshots of the application. Snapshots capture the state of the data at a specific moment in terms of incremental changes since the previous snapshot.

Various implementations are disclosed herein by which to restore a containerized application to a destination platform according to an incremental or phased-in restoration process in various implementations. In an implementation, the phased-in restoration process is a multiphase restoration of the application which may be performed periodically to protect application data. In a multiphase restoration, the restoration of the application proceeds in phases or increments which allows the resources of each phase to be verified or validated before the next phase of dependent resources are restored. A multiphase restoration stands in contrast to a one-shot full restoration of the application which does not provide for validation of application resources in phases. In an implementation, a multiphase restoration process includes phased-in or sequential restoration of an application's namespaces and resources to the destination from snapshots or backup archives of the application according to a process schedule. By phasing in the restoration in increments, the user or customer operating the application can ensure that restored resources or namespaces are operational at the destination cluster before the next phase is restored. A multiphase restoration may be implemented by a customer when a complex application is to be fully backed up to allow the customer to proactively troubleshoot errors as they arise during the restoration process.

In some scenarios of phased-in restoration, an application may be restored to a destination cluster based on selectively restoring namespaces or resources of multiple other applications, thereby enabling the application to be restored if its own resources are unavailable or nonexistent. Thus, an application can be intelligently restored by phasing in restoration of the application's resources with an awareness or in view of the relative importance of each resource to the application as well as other considerations (e.g., the processing load and storage requirements of phasing in a restoration as compared to those of a one-time full restoration).

In other implementations of the technology disclosed herein, an application may be continuously restored to the destination platform to maintain an up-to-date copy or mirror of the application at the destination platform. Continuous restoration is an on-going process of restoring an application in increments. Continuous restoration enables an application to be mirrored at a remote platform for a seamless failover and continuity of operations with minimal or no data loss in the event that an outage or system failure is detected at the source platform or for load balancing. Continuous restoration is based on incremental replication of the application's namespaces and resources according to a prioritization or selection criteria which enables select namespaces or resources to be restored more frequently over less critical namespaces and resources. In this way, a mirror of the application can be maintained at the destination platform by orchestrating restoration of application resources on an as-needed basis. Thus, continuous incremental restoration of an application at the destination platform enables recovery objectives for disaster recovery and business continuity to be met without the need for a one-time full application backup.

In various implementations, to enable a multiphase restoration or continuous restoration of an application, the namespaces or resources of the application are selectively restored to a destination cluster rather than restoring an entire application at a single point in time. Selective restoration enables flexibility in how applications are backed up and restored. To configure a multiphase restoration, for example, a user configures options which define the process, such as identifying which resources or namespaces are to be restored, a restoration schedule for each phase, and a merge policy by which to restore the various resources/namespaces. The phases may be conditional on the completion of a preceding phase including validation of the resources of the preceding phase. The merge policy may include options for restoring a resource at the destination, such as whether to delete and overwrite an early version of the resource, patch an existing resource, append to an existing resource, or prevent an existing resource at the restoration site from being modified or overwritten. In some cases, the merge policy may include whitelists or blacklists of resources to ensure proper resource handling, with whitelists indicating which resources are available for restoration and blacklists indicating which resources are not to be restored.

Application-level backup processes can involve backing up multiple components and dependencies, so managing and coordinating backups for complex applications can be challenging and consume significant resources, including CPU, memory, storage, and network bandwidth. This can severely impact the performance and availability of production systems during backup operations. Moreover, storing a backup archive for an application requires more storage capacity than backing up individual components or files, leading to higher storage costs and resource utilization. Further, not all resources will need to be backed up as frequently as other resources, introducing inefficiency in application-level backup operations. However, with a multiphase restoration process configured, to restore an application at its source cluster or a destination cluster, the application may be rebuilt from resources/namespaces of the application's backup archive and snapshot files according to the application metadata, resource definitions, and configuration files. An application can also be mirrored to another location (e.g., a destination cluster) by continuous, incremental restoration in a similar manner.

An application hosted on a Kubernetes cluster includes resources organized into namespaces. Among the resources of the Kubernetes application are components such as ConfigMaps, StatefulSets, Deployments, DaemonSets, ReplicaSets, Pods, Services, Ingress controllers, and Secrets, as well as custom resources. The application also includes persistent volume claims (PVCs) which connect the application (e.g., pods of the Kubernetes cluster) to persistent volumes (PVs) for storing application data. PVs and PVCs are classified in a Kubernetes architecture according to storage class. The resources of an application on a Kubernetes cluster may be virtually partitioned into namespaces which provide a measure of isolation, but which also allow resource sharing.

Data management of an application, including multiphase restore and continuous restore processes, may be performed by an application-aware software application (e.g., NetApp^{®} Astra Control) or by a command-line interface application. Management of an application in a Kubernetes environment may be configured according to application metadata and stored in YAML manifests or Helm^{®} charts. Kubernetes enables labels by which resources can be organized for grouping, selection, and management. Labels include key-value pairs of string values which can be used to tag Kubernetes objects according to the application, the environment (e.g., "production," "staging," "development," etc.), and so on.

In an implementation, the multiphase restore process and the continuous restore process are computer-implemented methods, such as microservices, which enable an application executing on a virtual machine or in a containerized environment (e.g., a Kubernetes environment) to be backed up and restored selectively and incrementally (i.e., according to application resource or namespace). The multiphase restore process or the continuous restore process may be implemented as pod executing on the source platform (e.g., source Kubernetes cluster) with the process configured according to the user-selected options. Incremental replication of the application enables flexibility in how the application can be backed up, and this flexibility allows backups to be configured to make more efficient use of computing resources while enabling improved RPOs and RTOs.

Various embodiments of the present technology provide for a wide range of technical effects, advantages, and/or improvements to computing systems and components. For example, various embodiments may include one or more of the following technical effects, advantages, and/or improvements: 1) unconventional and non-routine operations for application restoration in the context of a cloud orchestration platform; 2) use of flexibility in resource restoration to improve processing efficiency and improvement to RPOs and RTOs for application resources; and/or 3) changing the manner in which a computing system performs application restoration to a destination platform including mirroring the application to a destination. Some embodiments include additional technical effects, advantages, and/or improvements to computing systems and components.

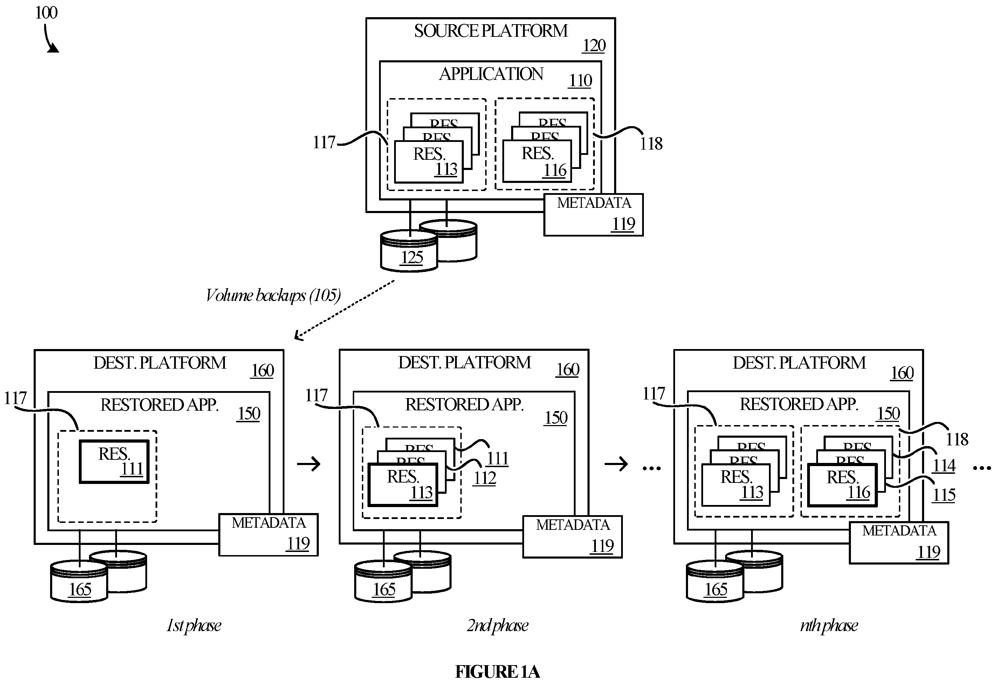

Turning now to the figures, **Figure 1A** illustrates operational environment 100 for a multiphase restore process for an application of cloud-based computing environment in an implementation. The application may include an application workload comprising namespaces and resources as well as application metadata. Various implementations of an application of a cloud-based computing environment include an application (e.g., a containerized application) hosted on a virtual machine or cluster, e.g., Kubernetes cluster, physical servers or a combination of such computing platforms.

Source platform 120 and destination platform 160 are representative of cloud orchestration platforms for hosting applications in a cloud-based environment. Source platform 120 and destination platform 160 are computing platforms which automate the deployment, management, and scaling of cloud resources and application. Such platforms serve as a centralized control system for provisioning and orchestrating various components of a cloud infrastructure, including virtual machines, containers, storage, networking, and services. Cloud orchestration platforms can manage resources, including allocating and configuring resources as well as managing resource lifecycles. Examples of cloud orchestration platforms include Kubernetes, Docker Swarm, Amazon Elastic Kubernetes Service (EKS), Google Kubernetes Engine (GKE), Microsoft Azure Kubernetes Service (AKS), Apache Mesos, Red Hat OpenShift, and HashiCorp Nomad.

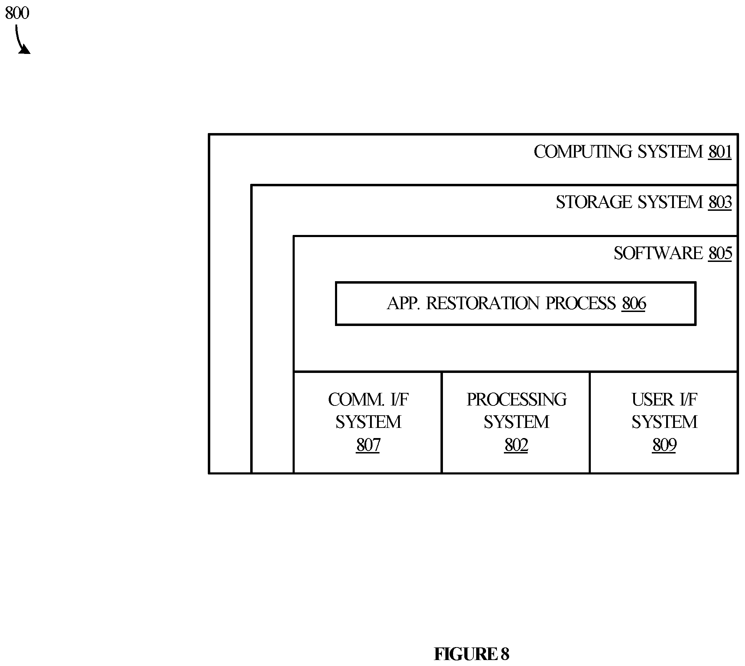

Source platform 120 and destination platform 160 may execute on one or more server computing devices of which computing system 801 of Figure 8 is broadly representative. Containers or virtual machines executing on source platform 120 or destination platform 160 encapsulate their own virtual computing devices which execute processes and workloads of application 110 and restored application 150, respectively. In various implementations, source platform 120 and destination platform 160 are Kubernetes clusters.

Application 110 is representative of a software application which executes on a cloud orchestration platform of a cloud-based environment. Application 110 includes a set of software components and services, i.e., resources, for performing specific functions or tasks to meet business or operational objectives, ranging from a simple web application to a complex microservice architecture. In some scenarios, application 110 executes on a cluster platform (e.g., a Kubernetes cluster) as a containerized application workload orchestrated by Kubernetes. In some scenarios, application 110 executes in a virtual machine environment, with application 110 running within one or more virtual machines managed by a hypervisor on the platform.

Application 110 includes one or more namespaces, such as namespaces 117, which in turn include various resources such as resources 111-116. Application 110 stores application data to persistent volumes 116. The architecture of application 110 is determined according to metadata 118, which includes information relating to the context, configuration (e.g., relationships between components of application 110), and operational details about application 110. For example, in a Kubernetes cluster, metadata 118 can include tags or labels of Kubernetes objects (e.g., pods, services, deployments), annotations (e.g., versions), namespaces by which resources 111-116 are organized, and resource quotas with respect to processing, memory, storage, etc. Metadata 118 can also include, in the context of a Kubernetes deployment, templates or manifests (e.g., YAML manifests) which define the configuration of application 110, including settings, parameters (API version, type/kind, name, ports, etc.), and the interfaces or relationships of a given resource with other resources.

Restored application 150 is representative of a copy (e.g., mirror image) of application 110 (e.g., a workload of application 110) which is restored to destination platform 160 based on backup archives and/or snapshots of application 110.

Resources 111-116 are representative of resources of application 110 which may include pods, services, deployments, PVCs, config maps, secrets, and so on. Resources 111-116 may be organized within namespaces 117 of application 110. Namespaces 117 are representative of environments in on a cloud orchestration platform for organizing resources of an application. In a Kubernetes cluster, namespaces are a unit of management for organizing resources such as resources 111-116. For example, namespaces divide K8s cluster resources into virtual clusters or partitions to create isolated environments in the cluster.

In a brief operational scenario of operational environment 100, a data management system backs up application data for application 110 by periodically capturing volume backups 105 of the application data from persistent volumes 125 and transmitting volume backups 105 to persistent volumes 165 at a disaster recovery site, i.e., destination platform 160.

At some point in time, the data management system performs a multiphase restoration process which has been triggered for application 110. For example, in the event of an outage at source platform 120, application 110 is to be rebuilt as restored application 150 at destination platform 160 to take over and maintain continuity of business operations. To reconstruct application 110 as restored application 150, destination platform 160 accesses a backup archive of application data from persistent volumes 165 and restores application 110 as restored application 150 in phases.

The multiphase restoration process executed by the data management system restores application 110 as restored application 150 on remote destination platform 160. The multiphase restoration process may have been defined or configured according to configuration options relating to a schedule for restoring application components (e.g., namespaces and resources) to restored application 150 to a location, such as destination platform 160. The configuration options include a sequence in which the namespaces and resources are restored along with a policy by which to restore the items at destination platform 160. Restoration scheduling may also be specified according to RPO/RTO requirements defined within the data management system.

When execution of the multiphase process is triggered, a first phase including a selection of application components (e.g., namespaces, resources) is restored to restored application 150. Upon being restored, the system validates the first phase by verifying that the components restored during the first phase are operational before proceeding to the next phase of the restoration. Validating the first phase includes testing network connectivity, verifying data integrity, and ensuring that any dependencies or relationships with other resources are properly configured. Testing network connectivity between a given resource and its dependencies includes verifying that the resource can establish connections (e.g., via an API) and communicate with its dependencies. Verifying data integrity of a given resource may include comparing checksums, hashes, or signatures of the backup data against known values to confirm that the data has not been corrupted. Ensuring dependency configuration includes checking various parameters (e.g., network settings, security keys) which define a relationship between a resource and a dependency against expected values. Having verified the first phase, the system executes the next phase of the restoration and validates the next phase. The process continues until application 110 is fully restored and validated at destination platform 160, at which point restored application 150 is promoted (e.g., promoted to read/write status) and takes over business operations in place of application 110.

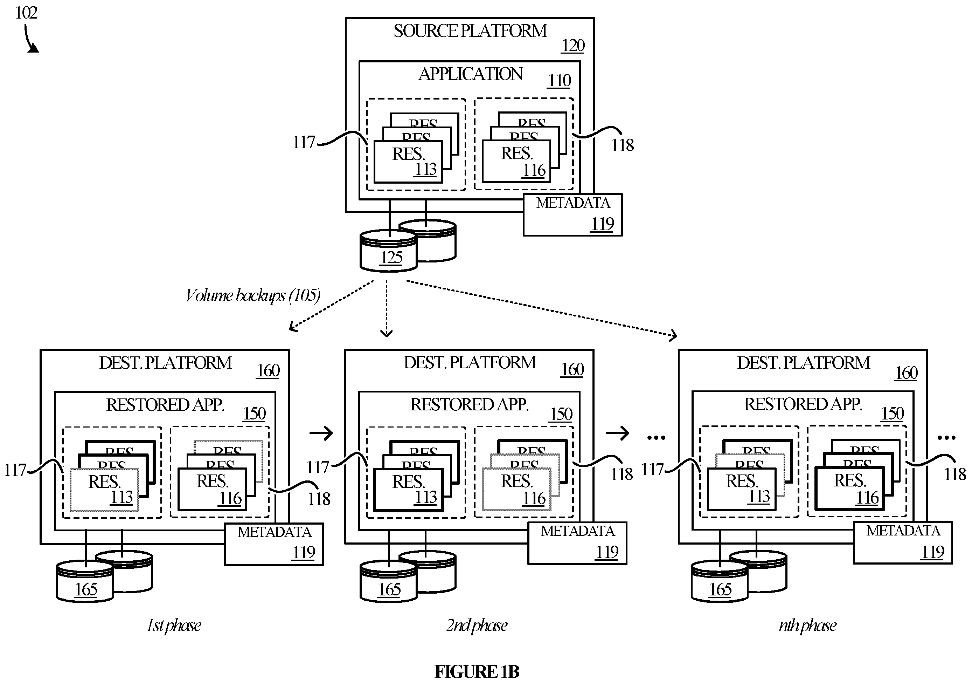

**Figure 1B** illustrates operational environment 102 for a continuous restore process for mirroring an application of a cloud-based computing environment in an implementation. In a brief operational scenario of operational environment 102, to ensure continuity of operations for disaster recovery, application 110 is continuously incrementally restored as restored application 150 at destination platform 160. In the continuous restore process, application data from persistent volumes 125 are backed up to persistent volumes 165 of restored application 150 by periodically capturing volume backups 105 of the application data from persistent volumes 125 and transmitting volume backups 105 to persistent volumes 165 at a disaster recovery site, i.e., destination platform 160. In the first phase of the continuous restoration, select resources (resources 111 and 112) are restored to restored application 150 from recently backed-up application data of persistent volumes 165. In the next phase of the continuous restoration, application data is again backed up to persistent volumes 125, and resources 113 and 114 are restored to restored application 150. Resource 111 is again restored. The continuous restore process continues with periodic backups of application data occurring and selections of resources being restored from the backed-up application data. In this way, resources which require frequent back up, such as resource 111 in operational environment 102 can be restored more frequently to meet RPO and RTO requirements, but other resources (e.g., less important resources) can be updated on a less frequent basis. Because a mirror of application 110, i.e., restored application 150, is continuously updated, in the event of an outage and failover, data traffic received at source platform 120 can be redirected to destination platform 160 with little or no data loss or downtime.

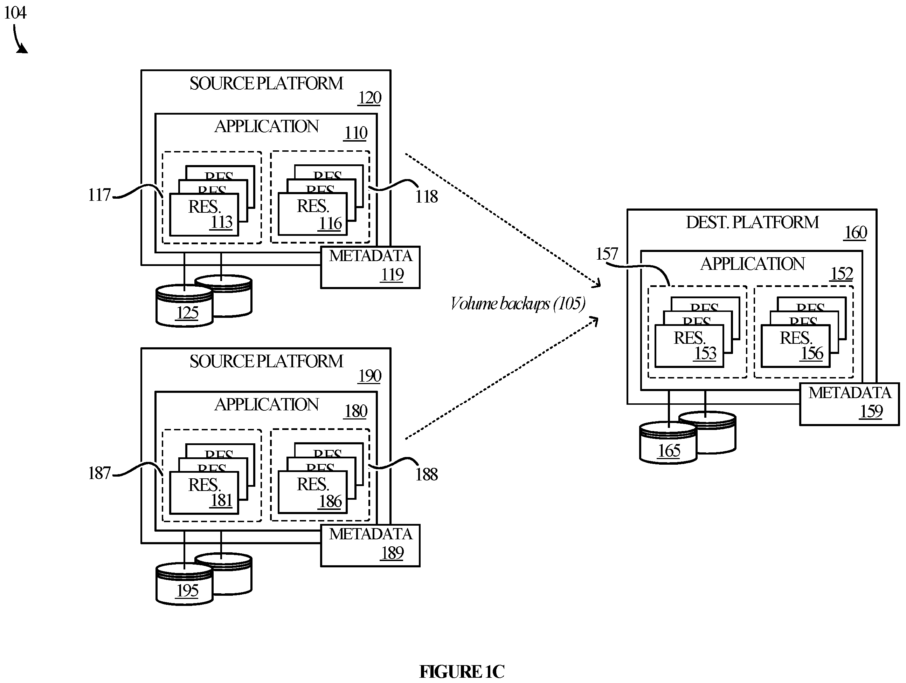

**Figure 1C** illustrates operational environment 104 for a process for building or restoring an application of cloud-based computing environment in an implementation. In a brief operational scenario of operational environment 104, application 152 is constructed based on components from application 110 and application 180 in an implementation. To build out application 152, application data from volume backups of application 110 on persistent volumes 125 and from volume backups of application 180 on persistent volumes 195 are copied to persistent volumes 165. Destination platform 160 constructs application 152 based on application metadata 159 using resources and/or namespaces extracted from the volume backups. For example, resource 153 may be an instance of resource 113 of application 110, while resource 156 may be an instance of resource 186 of application 180. In this way, application 152 can be built (or rebuilt) from resources of other applications without reliance on having its own volume backups. In various implementations, source platform 120, source platform 190, and destination platform 160 are Kubernetes clusters.

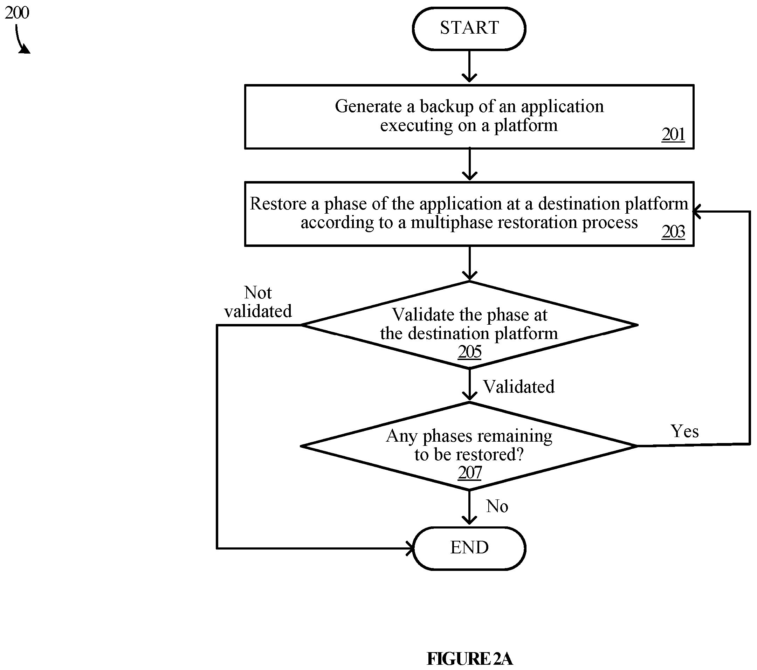

**Figure 2A** illustrates a method for a multiphase restore of an application hosted on a cloud orchestration platform in an implementation, herein referred to as process 200. Process 200 may be implemented in program instructions in the context of any of the software applications, modules, components, or other such elements of one or more computing devices. The program instructions direct the computing device(s) to operate as follows, referred to in the singular for the sake of clarity.

A computing device supporting an application executing on a cloud orchestration platform (e.g., a Kubernetes cluster) is managed by a data management system. The data management system generates a backup of the application for disaster recovery and business continuity (step 201). The backup of the application may be an archive encapsulating the entire application (e.g., a TAR file or ZIP file) or a snapshot (e.g., a volume snapshot or delta file) which stores changes to the application workload since a previous snapshot was captured. The backup may be persisted to a remote storage location, such as a persistent volume of a destination platform.

The data management system supports a multiphase restoration of the application. The multiphase restoration process is configured according to options selected by the user (e.g., a client associated with the application). The options of the multiphase restore process include defining phases each of which includes a subset of resources and/or a subset of namespaces which are to be restored from a backup of the application to either the source platform or the destination platform, and then validated. A subset of the resources may include one or more of the resources but not all of the application's resources. Similarly, a subset of the namespaces may include one or more of the namespaces but not all of the application's namespaces. In some scenarios, the phases may be specified in terms tags or labels attached to the resources and which can be used to define subsets of the resources. For example, labels may refer to namespaces or environments within the application. The options of the multiphase restore process also include a schedule defining the order and timing of restoring the phases, such as timing the phases to occur according to predetermined intervals of time or according to when the validation of the previous phase is completed. The options of the multiphase restore process also include policy selections for each of the restored resources or namespaces of each phase, the options indicating whether an existing instance of the resource or namespace should be deleted and overwritten by the restored version, whether content from the restored version should be appended to or patched into the existing instance, or whether the existing instance should not be replaced.

Continuing with process 200, a restoration is triggered, such as an outage, data loss/corruption, or security breach at the source platform. In some instances, process 200 may describe restoring the application at the source platform; for the purposes of illustration, process 200 as referred to herein will refer to restoring the application at a destination platform.

When the restoration is triggered, the system initiates a multiphase restoration process to restore the application to the destination platform. In the multiphase restoration process, the system restores a phase of the application at the destination platform (step 203). A given resource can be extracted from a backup archive using the pathname to the resource in the archive. Once the resources have been restored, the system then validates the resources that were properly restored by verifying their operation (step 205). When the phase is validated, the process continues with restoring next phase of the application and validated or until there are no other phases to be restored (step 207). The multiphase process continues until the application is fully restored and verified as functional at the destination platform.

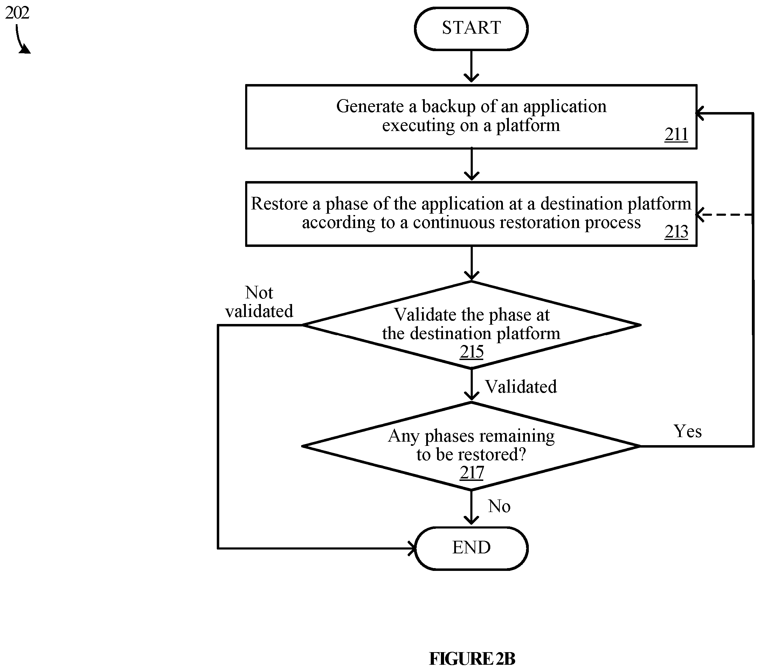

**Figure 2B** illustrates a method for continuous restoration of an application hosted on a cloud orchestration platform in an implementation, herein referred to as process 202. Process 202 may be implemented in program instructions in the context of any of the software applications, modules, components, or other such elements of one or more computing devices. The program instructions direct the computing device(s) to operate as follows, referred to in the singular for the sake of clarity.

A computing device supporting an application executing on a cloud orchestration platform (e.g., a Kubernetes cluster) is managed by a data management system. The data management system mirrors the application to a remote site, i.e., a destination platform, for disaster recovery and business continuity. To mirror the application, the data management system continuously generates backups of the application which may be archives encapsulating the entire application or snapshots (e.g., volume snapshots or delta files) which store changes to the application workload since a previous snapshot was captured. The backups may be persisted to a remote storage location, such as a persistent volume of a destination platform where the mirror is hosted.

The data management system supports a continuous restoration of the application such that a mirror of the application is incrementally updated according to a recent backup of the application. The continuous restoration process is configured according to options selected by the user (e.g., a client associated with the application). The options of the continuous restore process include defining phases each of which includes a subset of resources and/or a subset of namespaces which are to be restored from a recent backup of the application to the mirror and then validated. A subset of the resources may include one or more of the resources but not all of the application's resources. Similarly, a subset of the namespaces may include one or more of the namespaces but not all of the application's namespaces. In some scenarios, the phases may be specified in terms tags or labels attached to the resources and which can be used to define subsets of the resources. For example, labels may refer to namespaces or environments within the application. The options of the continuous restore process also include a schedule defining the order and timing of restoring the phases, such as timing the phases to occur according to predetermined intervals of time, according to when the validation of the previous phase is completed, or according to when backups of the application are captured (e.g., a backup schedule). In some scenarios, the options of the continuous restore process include policy selections for each of the restored resources or namespaces of each phase, the options indicating whether an existing instance of the resource or namespace should be deleted and overwritten by the restored version, whether content from the restored version should be appended to or patched into the existing instance, or whether the existing instance is immutable, i.e., should not be replaced.

Continuing with process 202, the data management system captures a backup of the application executing on the source platform (step 211). The backup of the application may be a complete backup of the application or a snapshot (e.g., a volume snapshot or delta file) which stores changes to the application workload since a previous snapshot was captured.

The system restores a phase of the application to a mirror at a destination platform according to the continuous restore process (step 213). When the phase is restored to the mirror of the application, the phase is validated by verifying its operational health (step 215). When the resources of the phase are verified as operational, process 202 continues when a next backup of the application is captured and a next phase of the continuous restore process is restored to the mirror, until there are no remaining phases to be restored (step 217). In some implementations, multiple phases may be restored from a backup. For example, two resources may be restored from a backup in sequence, with the second resource being restored when the operation of the first resource has been validated.

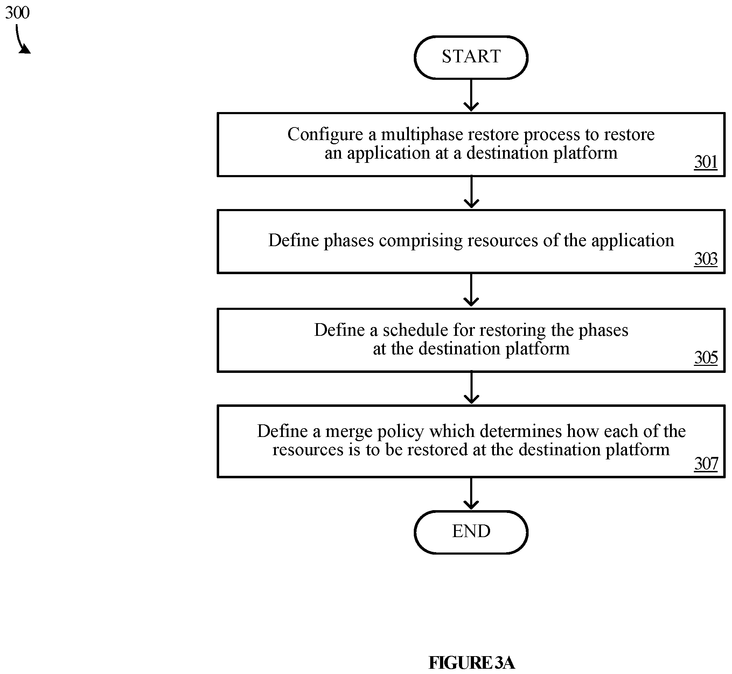

**Figure 3A** illustrates a method of configuring a multiphase restoration process in an implementation, herein referred to as process 300. Process 300 may be implemented in program instructions in the context of any of the software applications, modules, components, or other such elements of one or more computing devices. The program instructions direct the computing device(s) to operate as follows, referred to in the singular for the sake of clarity.

A computing device supporting an application executing on a cloud orchestration platform (e.g., a Kubernetes cluster) is managed by a data management system. The data management system generates a backup of the application for disaster recovery and business continuity. The backup of the application may be a complete backup of the application or a snapshot (e.g., a volume snapshot or delta file) which stores changes to the application workload since a previous snapshot was captured. The backup may be persisted to a remote storage location, such as a persistent volume of a destination platform.

The data management system supports a multiphase restoration of the application. The multiphase restoration process is configured according to options selected by the user (e.g., a client associated with the application) (step 301). To configure a multiphase restoration, a user interface of the data management system may receive user input for initiating process for defining a multiphase restoration for an application, including displaying options which the user can select for restoring the application.

To configure a multiphase restoration, the data management system displays options by which the user defines phases of the multiphase restore process (step 303). In an implementation, the user defines two or more phases for the process with each phase defined to include a subset of resources and/or a subset of namespaces to be restored from a backup of the application to the restoration site (e.g., the source platform or destination platform) and then validated. In some scenarios, the phases may be specified in terms tags or labels attached to the resources and which can be used to define or identify subsets of the resources. For example, labels may refer to namespaces or environments within the application.

The data management system also displays options for defining a schedule of the multiphase restore process (step 305). In an implementation, the multiphase restoration schedule determines the order and timing of restoring the phases, such as timing the phases to occur according to predetermined intervals of time or according to when the validation of the previous phase is completed. In some scenarios, the data management system may suggest an ordering based on dependencies among the resources.

The data management system also displays options for defining a merge policy for each of the restored resources or namespaces of each phase (step 307). In an implementation, the merge policy determines how each of the resources is to be restored at the restoration site. The options can include whether an existing instance of the resource or namespace should be deleted and overwritten by the restored version, whether content from the restored version should be appended to or patched into the existing instance, or whether the existing instance should not be replaced.

In various implementations, a process similar to process 300 can be configured for the continuous restoration of an application. To configure a continuous restore process, the user interface of a data management system may display options by which the user can define the schedule or frequency by which resources of an application are to be restored. For example, the schedule may indicate that certain resources to be synchronized with hourly or with every newly captured backup, while other resources are to be synchronized less frequently, e.g., on a daily cadence. So, in some scenarios, a resource of the application may be restored with every phase of the restoration, while other resources may be restored less frequently. In scheduling a continuous restore process, the schedule would also indicate an order by which the resources are to be restored at the restoration. In some scenarios, the data management system may suggest an ordering based on dependencies among the resources. The user interface may also display options to configure a merge policy which determines how resources should be restored with respect to existing instances of the resource (e.g., overwrite, append, etc.).

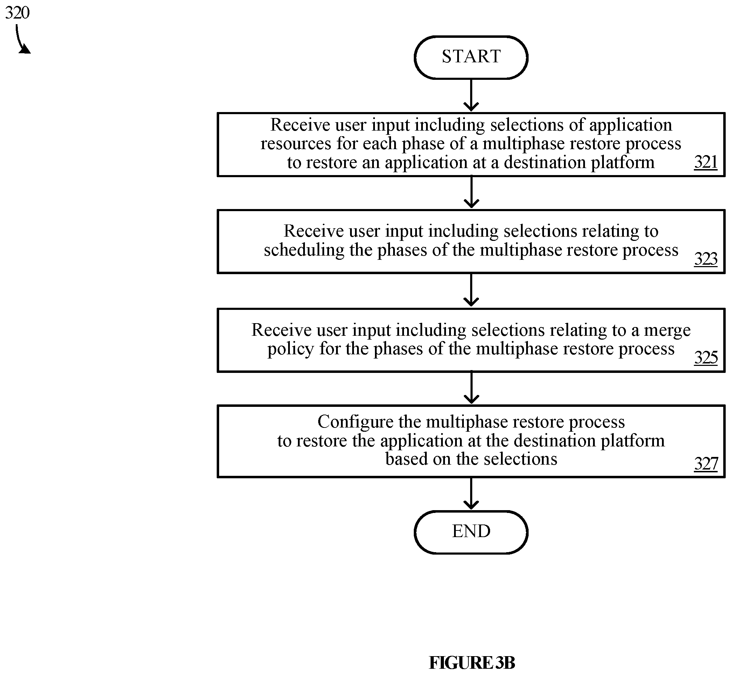

**Figure 3B** illustrates a method of configuring a multiphase restoration process in an implementation, herein referred to as process 320. Process 320 may be implemented in program instructions in the context of any of the software applications, modules, components, or other such elements of one or more computing devices. The program instructions direct the computing device(s) to operate as follows, referred to in the singular for the sake of clarity.

A computing device supporting an application executing on a cloud orchestration platform (e.g., a Kubernetes cluster) is managed by a data management system. The data management system generates a backup of the application for disaster recovery and business continuity. The backup of the application may be a complete backup of the application or a snapshot (e.g., a volume snapshot or delta file) which stores changes to the application workload since a previous snapshot was captured. The backup may be persisted to a remote storage location, such as a persistent volume of a destination platform.

To configure a multiphase restoration of the application, the data management system displays options in user interface for defining phases of the multiphase restore process and receives user input including selections of resources for each phase of the process (step 321). In an implementation, in a user interface of the data management system, the user defines two or more phases for the process with each phase defined to include a subset of resources and/or a subset of namespaces to be restored from a backup of the application to the restoration site (e.g., the source platform or destination platform) and then validated. In some scenarios, the phases may be specified in terms tags or labels attached to the resources and which can be used to define or identify subsets of the resources. For example, labels may refer to namespaces or environments within the application.

The user interface of the data management system receives user input including selections of options for defining a schedule of the multiphase restore process (step 323). In an implementation, the multiphase restoration schedule determines the order and timing of restoring the phases, such as timing the phases to occur according to predetermined intervals of time or according to when the validation of the previous phase is completed. In some scenarios, the data management system may suggest an ordering based on dependencies among the resources.

The data management system receives user input including selections of options for defining a merge policy for each of the restored resources or namespaces of each phase (step 325). In an implementation, the merge policy determines how each of the resources is to be restored at the restoration site. The options can include whether an existing instance of the resource or namespace should be deleted and overwritten by the restored version, whether content from the restored version should be appended to or patched into the existing instance, or whether the existing instance is immutable, i.e., should not be replaced.

Having received the user's selections which define the multiphase restore process, the data management system configures the process (step 327). In an implementation, the data management system stores the selections and executes the multiphase restore process in accordance with the selections. For example, the data management system may generate a program or script based on the selections by which to cause a multiphase restore functionality to execute according to the script. In various implementations, the selections are stored in a configurations file for use with other source clusters or applications.

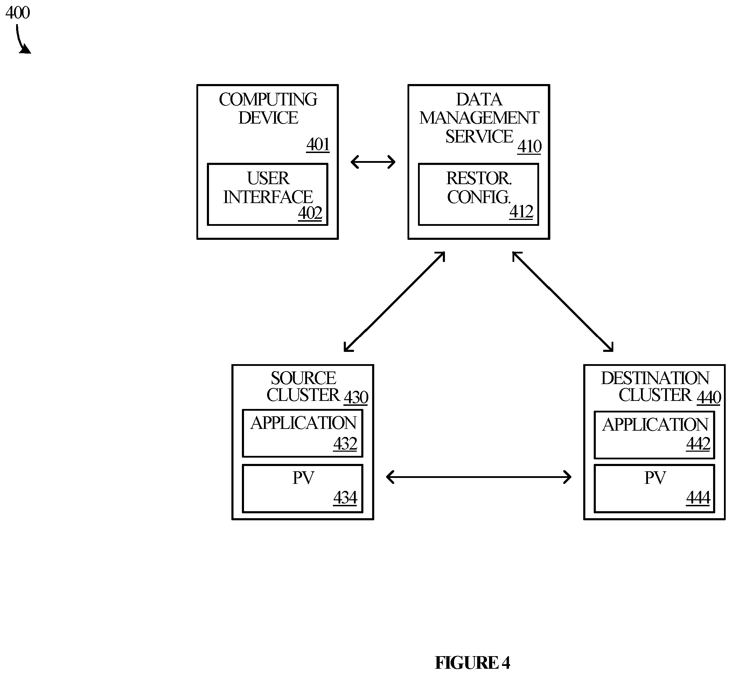

Turning now to **Figure 4****,** operational environment 400 illustrates an architecture for performing a restoration, such as a multiphase or continuous restoration, of an application hosted by a cloud orchestration platform in an implementation. Operational environment 400 includes computing device 401 communicating with data management service 410 and displaying user interface 402 hosted by data management service 410. Data management service 410 includes restoration configuration 412 which defines a restoration process for restoring application 432 hosted on source cluster 430. Source cluster 430 includes persistent volumes 434 which store backups of application data for application 432, such as application workloads of application 432. Data management service 410 manages backing or mirroring processes of application 432 to destination cluster 440. Destination cluster 440 hosts application 442 which is a mirror or restoration of application 432. Destination cluster also includes persistent volumes 444 which store backups of application 432 copied from persistent volumes 434.

Computing device 401 is representative of a computing device, such as a laptop or desktop computer, or mobile computing device, such as a tablet computer or cellular phone, of which computing system 801 in Figure 8 is broadly representative. Computing device 401 communicates with data management service 410 via one or more internets and intranets, the Internet, wired or wireless networks, local area networks (LANs), wide area networks (WANs), and any other type of network or combination thereof. A user interacts with an application of data management service 410 via user interface 402 displayed on computing device 401.

Data management service 410 is representative of a service for managing cloud orchestration platforms such as Kubernetes clusters. Data management service 410 may execute on one or more server computing devices of which computing system 801 of Figure 8 is broadly representative. Data management service 410 communicates with computing device 401 as well as source cluster 430 and destination cluster 430 via one or more internets and intranets, the Internet, wired or wireless networks, local area networks (LANs), wide area networks (WANs), and any other type of network or combination thereof. Data management service 410 hosts service and functionalities for managing cloud orchestration platforms, such as data management and data protection, including orchestrating application backup and restoration.

Restoration configuration 412 is representative of selections which define a restoration process, such as a multiphase restoration or a continuous restoration. The selections may include phase definitions which determine which resources of a given application are to be restored according to a schedule or frequency. The selections may also include the restoration schedule which determines when or how often each phase of the process is to be restored. The selections may also include a merge policy which determines how a new resource restoration is to be merged with an existing resource restoration at the restored application. Restoration configuration may be determined according to a configuration process such as process 300 of Figure 3.

Source cluster 430 and destination cluster 440 are representative of Kubernetes clusters, container orchestration platforms for cloud, on-premises, and hybrid-cloud environments that automates the deployment, scaling, and management of containerized applications across clusters of nodes. Central to application deployment in Kubernetes clusters are pods, the smallest deployable units created and managed by Kubernetes. A pod represents a group of one or more containers that share storage, network, and a specification on how to run the containers; the use of pods in clusters facilitates the efficient management of containerized application workloads. An application, such as application 432 or 442, executing on a Kubernetes cluster may be a containerized workload that collectively provides a specific functionality or service. Kubernetes clusters may operate on physical servers (e.g., for an on-premises deployment), on cloud-based virtual machines, or on hybrid or multi-cloud environments. Source cluster 430 and destination cluster 440 may execute on one or more server computing devices of which computing system 801 of Figure 8 is broadly representative. Containers or virtual machines executing on source cluster 430 or destination cluster 440 encapsulate their own virtual computing devices which execute processes and workloads of application 432 and application 442, respectively.

Application 432 executing on source cluster 430 is representative of a software application which executes on a Kubernetes cluster platform of a cloud-based environment. Application 110 includes a set of software components and services, i.e., resources, for performing specific functions or tasks to meet business or operational objectives, ranging from a simple web application to a complex microservice architecture. In some scenarios, application 432 executes on source cluster 430 as a containerized application workload orchestrated by Kubernetes.

Application 432 includes one or more namespaces which include various resources. Application 432 stores application data to persistent volumes 434. The architecture of application 432 is determined according to application metadata (not shown) which includes information relating to the context, configuration (e.g., relationships between resources of application 432), and operational details about application 432. For example, in a Kubernetes cluster, the application metadata can include tags or labels of Kubernetes objects (e.g., pods, services, deployments), annotations (e.g., versions), namespaces by which application resources are organized, and resource quotas with respect to processing, memory, storage, etc. The application metadata can also include, in the context of a Kubernetes deployment, templates or manifests (e.g., YAML manifests) which define the configuration of application 432, including settings, parameters (API version, type/kind, name, ports, etc.), and the interfaces or relationships of a given resource with other resources.

Application 442 executing on destination cluster 440 is representative of a copy (e.g., mirror) of application 432 (e.g., a workload of application 432) which is restored to destination platform 440 based on backups and/or snapshots of application 432 for the purposes of disaster recovery, load balancing, etc.

Persistent volumes 434 and 444 are representative of devices for the storage and management of data associated with applications deployed within a cluster. PVs 434 and 444 persist application data for stateful applications and thus independently of the lifecycles of cluster pods. Applications 432 and 442 access data from persistent volumes 434 and 444 via PVCs which are resources by which the applications can request an allocation of storage from the persistent volumes.

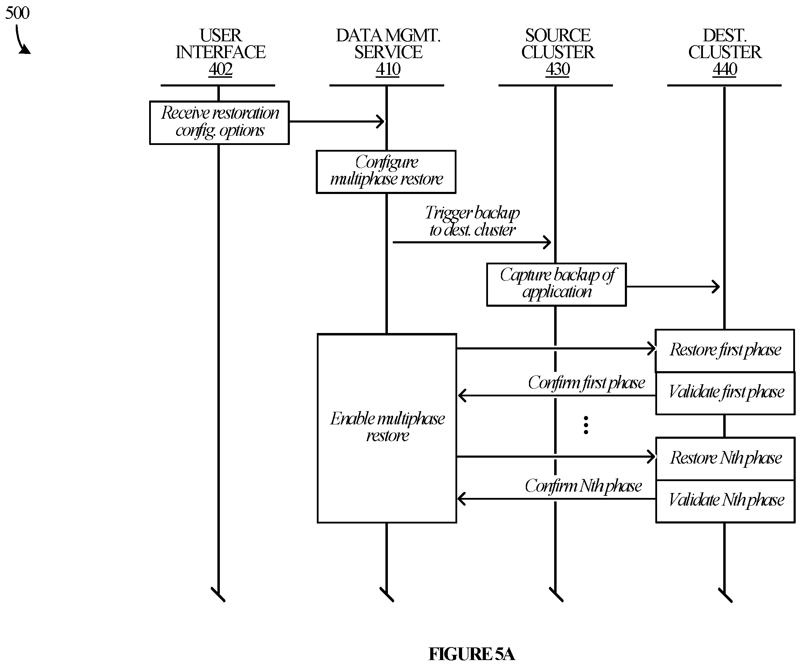

**Figure 5A** illustrates workflow 500 for a multiphase restore of an application hosted on a cloud orchestration platform in an implementation. In workflow 500, a user configures a multiphase restoration process in user interface 402 of data management service 410 hosted on computing device 401. To configure the process, the user may select various options with regard to the sequence in which resources of application 432 are to be restored, the frequency and scheduling for restoring the resources, and how the resources are to be restored with respect to existing versions of the resource at the restoration site. In an implementation, the user may configure the multiphase restore process according to process 300 of Figure 3 or similar. Data management service 410 stores the selected options as restore configuration 412.

Next, data management service 410 implements restore configuration 412 of the multiphase restoration process including backing up application 432 such as by capturing backup copies or snapshots of application 432 and persisting the backup to PV 434. The backup of application 432 is persisted to PV 444 of destination cluster 440. Data management service 410 directs the first phase of the multiphase restoration to be restored at destination cluster 440. Upon restoring the first phase of the restoration, data management service 410 validates the operation of the resources of the first phase, then initiates the restoration and validation of the next phase. The multiphase restoration continues with application 442 constructed via a phased-in restoration.

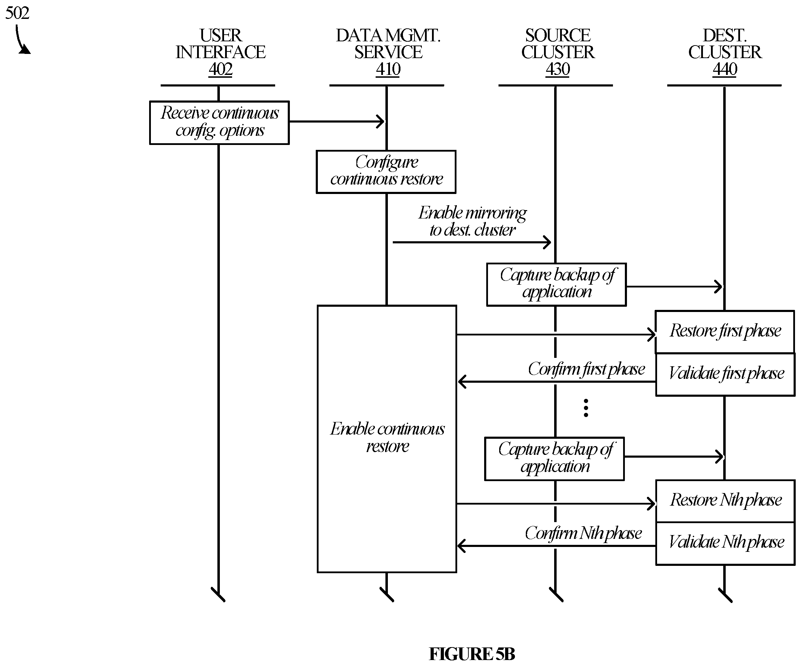

**Figure 5B** illustrates workflow 502 for a continuous restoration of an application hosted on a cloud orchestration platform in an implementation. The continuous restoration may be implemented in some scenarios to synchronize or mirror application 432 with application 442 at a restoration site, e.g., destination cluster 440. In workflow 502, the user selects options for a continuous restoration of application 432 in user interface 402. To configure restore configuration 412, the user may select options by which to schedule the sequential restoration of application resources, including an order and timing of the restoration as well as a frequency with which the resources are to be restored. The continuous restore configuration may be in association with regularly scheduled backups of application 432. Data management service 410 stores and implements restore configuration 412 with respect to the continuous restore.

With a continuous restore process configured, data management service 410 initiates a backup of application 432 at source cluster 430, then enables the continuous restoration of application 432 according to restore configuration 412. To continuously restore application 432 as application 442, data management service 410 causes the first phase of the continuous restoration to be performed including validating the restored resources at destination cluster 440. As backups of application 432 are captured, data management service 410 causes the phase to be restored. For example, the restoration sequence may include restoring Resources A, B, and C with every backup, but restoring Resources C and D on a daily basis. The continuous restoration may be an ongoing process by which to maintain an up-to-date copy of application 432 (i.e., application 442) whereby resources are restored according to a frequency based on criteria such as the criticality of the resource.

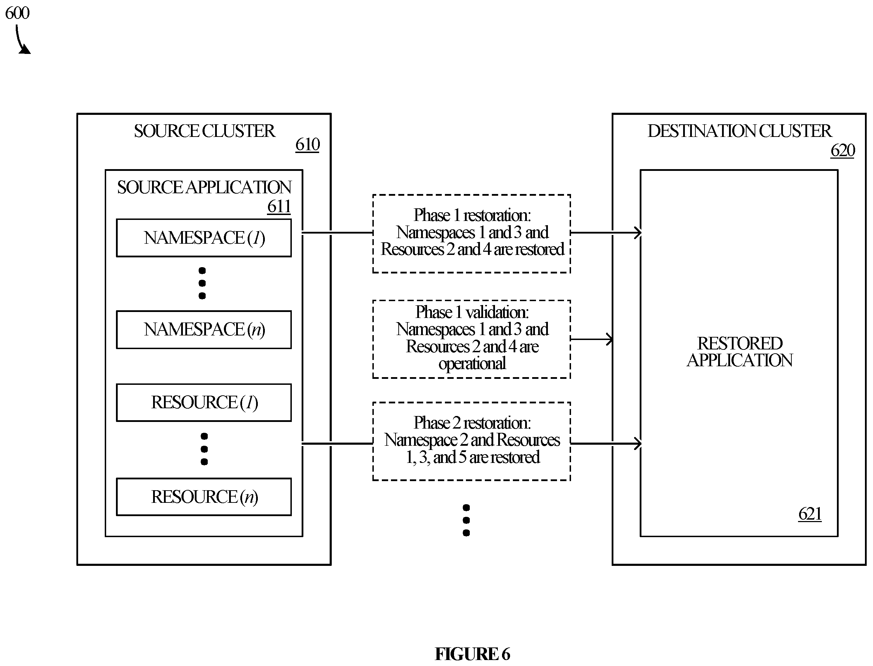

**Figure 6** illustrates operational environment 600 for a multiphase restoration process of an application hosted on a cluster in an implementation. In operational environment 600, source cluster 610 hosts source application 611 including *n* namespaces and *n* resources. In some implementations, source cluster 610 is a Kubernetes cluster, and source application 611 is a containerized application. In operation, source application 611 is to be backed up to destination cluster 620 for data protection and recovery in the event of a service disruption at source cluster 610. The backup of source application 611 is restored application 621 which represents a copy of source application 611 for data recovery (e.g., in the event of data loss or data corruption at source cluster 610), service restoration, and so on.

The multiphase restoration process proceeds with a data management application (not shown) implementing a phased-in restoration of source application 611 to destination cluster 620. To implement such a restoration, a sequence of phases including various ones of the resources and namespaces of source application 611 is configured. As illustrated in Figure 6, in the first phase of the restoration, Namespaces 1 and 3 and Resources 2 and 4 may be restored to restored application 621, then validated as operational at destination cluster 620. Once the first phase is validated, the second phase of restoration (including Namespace 2 and Resources 1, 3, and 5) ensues followed by validation of the namespaces and resources of the second phase. The process continues until source application 611 is fully restored as restored application 621, at which point another multiphase restoration is initiated by the data management application to ensure that the resources at restored application 621 are up-to-date.

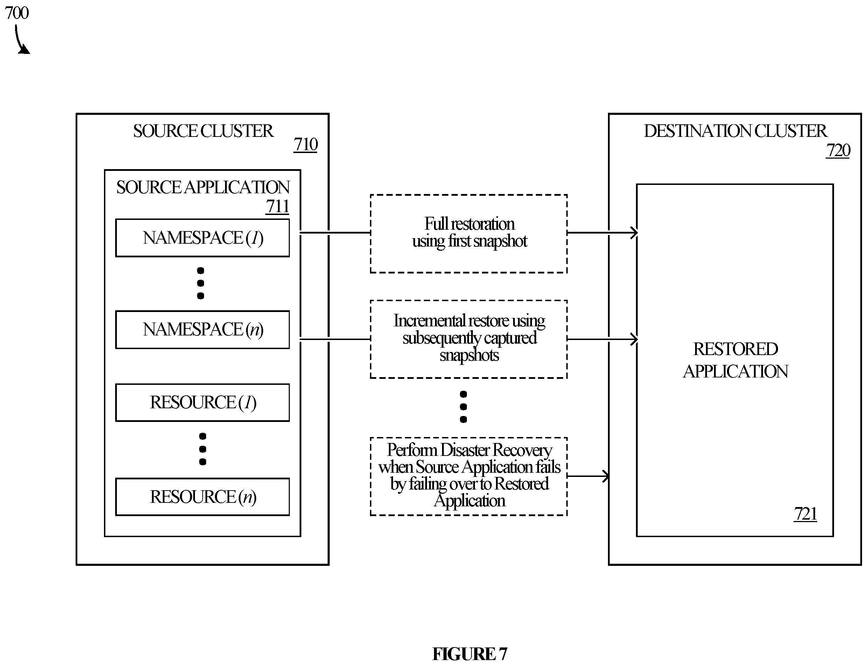

**Figure 7** illustrates operational environment 700 for a continuous restoration process of an application hosted on a source cluster in an implementation. In operational environment 700, source cluster 710 hosts source application 711 including *n* namespaces and *n* resources. In some implementations, source cluster 710 is a Kubernetes cluster, and source application 711 is a containerized application. In operation, source application 711 is to be backed up or mirrored at destination cluster 720 for data recovery and business continuity, e.g., in the event of an outage at source cluster 710. Restored application 721 at destination cluster 720 represents a continually updated or synchronized copy of source application 711 for failover, mirroring, load balancing, and so on.

The continuous restoration process proceeds with a data management application (not shown) implementing a continuous restoration of source application 711 to destination cluster 720. To implement the continuous restoration, a sequence of phases including various ones of the resources and namespaces of source application 711 is defined. As illustrated in Figure 7, a full restoration of source application 711 including all its namespaces and resources is performed to newly create restored application 721 or to update already existing restored application 721. Next, subsets or phases of namespaces and resources of source application 711 are incrementally restored to restored application 721 as snapshots of source application 711 are captured. As the snapshots are captured, a select portion of the snapshot is restored according to the defined process. Thus, the more critical resources of source application 711 may be restored more frequently (e.g., with every snapshot), while less important resources may be restored less frequently. The process continues so that restored application 721 is an up-to-date or nearly up-to-date copy of source application 711. In the event that a failure is detected at source cluster 710 (e.g., service outage, data corruption or loss at source application 711), the data management application triggers a failover to restored application 721. Because restored application 721 has been continuously restored, the failover results in minimal downtime or loss of data, thereby improving the reliability of the operations.

**Figure 8** illustrates computing device 801 that is representative of any system or collection of systems in which the various processes, programs, services, and scenarios disclosed herein may be implemented. Examples of computing device 801 include, but are not limited to, desktop and laptop computers, tablet computers, mobile computers, and wearable devices. Examples may also include server computers, web servers, cloud computing platforms, and data center equipment, as well as any other type of physical or virtual server machine, container, and any variation or combination thereof.

Computing device 801 may be implemented as a single apparatus, system, or device or may be implemented in a distributed manner as multiple apparatuses, systems, or devices. Computing device 801 includes, but is not limited to, processing system 802, storage system 803, software 805, communication interface system 807, and user interface system 809 (optional). Processing system 802 is operatively coupled with storage system 803, communication interface system 807, and user interface system 809.

Processing system 802 loads and executes software 805 from storage system 803. Software 805 includes and implements application restoration process 806, which is (are) representative of the application restoration processes discussed with respect to the preceding Figures, such as process 200 and workflows 500 and 502. When executed by processing system 802, software 805 directs processing system 802 to operate as described herein for at least the various processes, operational scenarios, and sequences discussed in the foregoing implementations. Computing device 801 may optionally include additional devices, features, or functionality not discussed for purposes of brevity.

Referring still to Figure 8, processing system 802 may comprise a micro-processor and other circuitry that retrieves and executes software 805 from storage system 803. Processing system 802 may be implemented within a single processing device but may also be distributed across multiple processing devices or sub-systems that cooperate in executing program instructions. Examples of processing system 802 include general purpose central processing units, graphical processing units, application specific processors, and logic devices, as well as any other type of processing device, combinations, or variations thereof.

Storage system 803 may comprise any computer readable storage media readable by processing system 802 and capable of storing software 805. Storage system 803 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 803 may also include computer readable communication media over which at least some of software 805 may be communicated internally or externally. Storage system 803 may be implemented as a single storage device but may also be implemented across multiple storage devices or sub-systems co-located or distributed relative to each other. Storage system 803 may comprise additional elements, such as a controller, capable of communicating with processing system 802 or possibly other systems.

Software 805 (including application restoration process 806) may be implemented in program instructions and among other functions may, when executed by processing system 802, direct processing system 802 to operate as described with respect to the various operational scenarios, sequences, and processes illustrated herein. For example, software 805 may include program instructions for implementing an application restoration process as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 805 may include additional processes, programs, or components, such as operating system software, virtualization software, or other application software. Software 805 may also comprise firmware or some other form of machine-readable processing instructions executable by processing system 802.

In general, software 805 may, when loaded into processing system 802 and executed, transform a suitable apparatus, system, or device (of which computing device 801 is representative) overall from a general-purpose computing system into a special-purpose computing system customized to support multiphase and continuous restoration in an optimized manner. Indeed, encoding software 805 on storage system 803 may transform the physical structure of storage system 803. The specific transformation of the physical structure may depend on various factors in different implementations of this description. Examples of such factors may include, but are not limited to, the technology used to implement the storage media of storage system 803 and whether the computer-storage media are characterized as primary or secondary storage, as well as other factors.

For example, if the computer readable storage media are implemented as semiconductor-based memory, software 805 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 807 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing device 801 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Indeed, the included descriptions and figures depict specific embodiments to teach those skilled in the art how to make and use the best mode. For the purpose of teaching inventive principles, some conventional aspects have been simplified or omitted. Those skilled in the art will appreciate variations from these embodiments that fall within the scope of the disclosure. Those skilled in the art will also appreciate that the features described above may be combined in various ways to form multiple embodiments. As a result, the invention is not limited to the specific embodiments described above, but only by the claims and their equivalents.
**The following is a list of further preferred embodiments of the invention:**
Embodiment 1. A computing apparatus, comprising:
   one or more computer readable storage media;
   one or more processors operatively coupled with the one or more computer readable storage media; and
   program instructions stored on the one or more computer readable storage media that, when executed by the one or more processors, direct the computing apparatus to at least:
      receive a configuration for a multiphase restoration of an application to a destination platform;
      capture a backup of application data of the application;
      implement the multiphase restoration based on the configuration, wherein to implement the multiphase restoration, the program instructions direct the computing apparatus to:
         restore a phase of the multiphase restoration to the destination platform based on the backup of the application data and according to the configuration, wherein the phase comprises selected resources of the resources of the application;
         validate the selected resources at the destination platform; and
         based on validating the selected resources at the destination platform, restore a next phase to the destination platform based on the backup of the application data according to the configuration.
   Embodiment 2. The computing apparatus of embodiment 1, wherein the configuration comprises settings relating to selections of the resources, scheduling, and a merge policy for each phase of the multiphase restoration.
   Embodiment 3. The computing apparatus of embodiment 2, wherein to receive the configuration for the multiphase restoration to restore the application to the destination platform, the program instructions direct the computing apparatus to:
      receive user input comprising the selections of resources for each phase of the multiphase restoration;
      receive user input comprising selections relating to the scheduling for each phase of the multiphase restoration; and
      receive user input comprising selections relating to the merge policy for each phase of the multiphase restoration, wherein the merge policy determines how the resources of each phase are to be restored at the destination platform.
Embodiment 4. The computing apparatus of embodiment 3, wherein the merge policy comprises, for a given resource of the selections of resources, a policy for restoring the given resource at the destination platform, wherein the policy comprises one of: overwrite, append, patch, and do not restore.
Embodiment 5. The computing apparatus of embodiment 1, wherein to validate the selected resources of the phase at the destination platform, the program instructions direct the computing apparatus to test resource connectivity, verify resource data integrity, and verify dependencies of the resource with respect to others of the resources of the application.
Embodiment 6. The computing apparatus of embodiment 1, wherein to capture the backup of the application data of the application, the program instructions direct the computing apparatus to:
   generate a backup archive or a snapshot of the application data of the application; and
   persist the backup to one or more persistent volumes.
Embodiment 7. The computing apparatus of embodiment 1, wherein the application is a containerized application executing on a Kubernetes cluster.
Embodiment 8. The computing apparatus of embodiment 1, wherein the selected resources of the phase comprise a subset of the resources that does not include all of the resources of the application.
Embodiment 9. A method of operating a computing device comprising:
   receiving a configuration for a multiphase restore process for restoring resources of an application in phases to a destination platform;
   capturing a backup of application data of the application;
   implementing the multiphase restore process based on the configuration by:
      restoring a phase of the phases to the destination platform based on the backup of the application data according to the configuration, wherein the phase comprises selected resources of the resources of the application;
      validating the selected resources at the destination platform; and
      based on validating the selected resources at the destination platform, restoring a next phase to the destination platform based on the backup of the application data according to the configuration.
Embodiment 10. The method of embodiment 9, wherein the configuration comprises settings relating to selections of the resources, scheduling, and a merge policy for each phase of the phases.
Embodiment 11. The method of embodiment 10, wherein receiving the configuration for the multiphase restore process to restore the application to the destination platform comprises:
   receiving user input comprising the selections of resources for each phase of the phases;
   receiving user input comprising selections relating to the scheduling for each phase of the phases; and
   receiving user input comprising selections relating to the merge policy for each phase of the phases, wherein the merge policy determines how the resources of each phase are to be restored at the destination platform.
Embodiment 12. The method of embodiment 11, wherein the merge policy comprises, for a given resource, a policy for restoring the given resource at the destination platform, wherein the policy comprises one of: overwrite, append, patch, and do not restore.
Embodiment 13. The method of embodiment 9, wherein validating the selected resources of the phase at the destination platform comprises testing resource connectivity, verifying resource data integrity, and verifying dependencies of the resource with respect to others of the resources of the application.
Embodiment 14. The method of embodiment 9, wherein capturing the backup of the application data of the application comprises:
   generating a backup archive or snapshot of application data of the application; and
   persisting the backup to one or more persistent volumes.
Embodiment 15. The method of embodiment 9, wherein the application is a containerized application executing on a Kubernetes cluster.
Embodiment 16. The method of embodiment 9, wherein the selected resources of the phase comprise a subset of the resources that does not include all of the resources of the application.
Embodiment 17. A computing apparatus, comprising:
   one or more computer readable storage media;
   one or more processors operatively coupled with the one or more computer readable storage media; and
   program instructions stored on the one or more computer readable storage media that, when executed by the one or more processors, direct the computing apparatus to at least:
      receive a configuration for a continuous restoration of an application to a destination platform, wherein the continuous restoration comprises phases and wherein a phase of the phases comprises selected resources of the resources of the application;
      implement the continuous restoration based on the configuration, wherein to implement the continuous restoration, the program instructions direct the computing apparatus to:
         capture a backup of application data of the application;
         restore a phase of the phases to the destination platform based on the backup of the application data according to the configuration;
         validate the selected resources at the destination platform; and
         based on validating the selected resources at the destination platform, restore a next phase to the destination platform based on the backup of the application data according to the configuration.
Embodiment 18. The computing apparatus of embodiment 17, wherein the configuration comprises settings relating to selections of the resources, scheduling, and a merge policy for each phase of the phases.
Embodiment 19. The computing apparatus of embodiment 18, wherein to receive the configuration for the continuous restoration to restore the application to the destination platform, the program instructions direct the computing apparatus to:
   receive user input comprising the selections of resources for each phase of the phases;
   receive user input comprising selections relating to the scheduling for each phase of the phases; and
   receive user input comprising selections relating to the merge policy for each phase of the phases, wherein the merge policy determines how the resources of the application are to be restored at the destination platform.
Embodiment 20. The computing apparatus of embodiment 19, wherein the merge policy comprises, for a given resource of the selections of resources, a policy for restoring the given resource at the destination platform, wherein the policy comprises one of: overwrite, append, patch, and do not restore.
Embodiment 21. The computing apparatus of embodiment 17, wherein to validate the selected resources of the phase at the destination platform, the program instructions direct the computing apparatus to test resource connectivity, verify resource data integrity, and verify dependencies of the resource with respect to others of the resources of the application.
Embodiment 22. The computing apparatus of embodiment 17, wherein to capture the backup of the application data of the application, the program instructions direct the computing apparatus to:
   generate a backup archive or a snapshot of the application data of the application; and
   persist the backup to one or more persistent volumes.
Embodiment 23. The computing apparatus of embodiment 17, wherein the application is a containerized application executing on a Kubernetes cluster.
Embodiment 24. The computing apparatus of embodiment 17, wherein the selected resources of the phase comprise a subset of the resources that does not include all of the resources of the application.
Embodiment 25. A method of operating a computing device, comprising:
   maintaining a mirror of an application at a destination platform, wherein the application is hosted at a source platform and wherein maintaining the mirror comprises incrementally restoring resources of the application to the mirror at the destination platform;
   detecting a failure of the application hosted at the source platform; and
   initiating a failover to the mirror of the application at the destination platform.
Embodiment 26. The method of embodiment 25, wherein initiating the failover to the mirror of the application comprises promoting the mirror of the application to take over operations from the application.
Embodiment 27. The method of embodiment 26, wherein initiating the failover to the mirror of the application further comprises directing data traffic from the source platform to the destination platform.
Embodiment 28. The method of embodiment 25, wherein incrementally restoring the resources of the application to the mirror at the destination platform comprises:
   capturing a backup of application data of the application;
   restoring resources of the application to the mirror at the destination platform based on the backup;
   capturing a second backup of application data of the application; and
   restoring a subset of resources of the application to the mirror based on the second backup, wherein the subset includes at least one resource which was not restored based on the backup.
Embodiment 29. The method of embodiment 28, wherein the second backup comprises changes in the application data since the backup was captured.
Embodiment 30. The method of embodiment 29, further comprising validating the subset of resources at the destination platform.
Embodiment 31. The method of embodiment 28, wherein restoring resources of the application to the mirror comprises restoring one or more namespaces of the application to the mirror.
Embodiment 32. The method of embodiment 25, wherein the source platform comprises a Kubernetes cluster.

## Claims

1. A computing apparatus (801), comprising:
one or more computer readable storage media;
one or more processors operatively coupled with the one or more computer readable storage media; and
program instructions stored on the one or more computer readable storage media that, when executed by the one or more processors, direct the computing apparatus to at least:
receive a configuration for a multiphase restoration of an application (110) to a destination platform (160);
capture a backup (105) of application data of the application;
implement the multiphase restoration based on the configuration, wherein to implement the multiphase restoration, the program instructions direct the computing apparatus to:
restore a phase of the multiphase restoration to the destination platform based on the backup of the application data and according to the configuration, wherein the phase comprises selected resources of the resources of the application;
validate the selected resources at the destination platform; and
based on validating the selected resources at the destination platform, restore a next phase to the destination platform based on the backup of the application data according to the configuration.

2. The computing apparatus of claim 1, wherein the configuration comprises settings relating to selections of the resources, scheduling, and a merge policy for each phase of the multiphase restoration.

3. The computing apparatus of claim 2, wherein to receive the configuration for the multiphase restoration to restore the application to the destination platform, the program instructions direct the computing apparatus to:
receive user input comprising the selections of resources for each phase of the multiphase restoration;
receive user input comprising selections relating to the scheduling for each phase of the multiphase restoration; and
receive user input comprising selections relating to the merge policy for each phase of the multiphase restoration, wherein the merge policy determines how the resources of each phase are to be restored at the destination platform.

4. The computing apparatus of claim 3, wherein the merge policy comprises, for a given resource of the selections of resources, a policy for restoring the given resource at the destination platform, wherein the policy comprises one of: overwrite, append, patch, and do not restore.

5. The computing apparatus of claim 1, wherein to validate the selected resources of the phase at the destination platform, the program instructions direct the computing apparatus to test resource connectivity, verify resource data integrity, and verify dependencies of the resource with respect to others of the resources of the application.

6. The computing apparatus of claim 1, wherein to capture the backup of the application data of the application, the program instructions direct the computing apparatus to:
generate a backup archive or a snapshot of the application data of the application; and
persist the backup to one or more persistent volumes.

7. The computing apparatus of claim 1, wherein the application is a containerized application executing on a Kubernetes cluster.

8. The computing apparatus of claim 1, wherein the selected resources of the phase comprise a subset of the resources that does not include all of the resources of the application.

9. A method of operating a computing device (801) comprising:
receiving a configuration for a multiphase restore process for restoring resources of an application (110) in phases to a destination platform (160);
capturing a backup (105) of application data of the application;
implementing the multiphase restore process based on the configuration by:
restoring a phase of the phases to the destination platform based on the backup of the application data according to the configuration, wherein the phase comprises selected resources of the resources of the application;
validating the selected resources at the destination platform; and
based on validating the selected resources at the destination platform, restoring a next phase to the destination platform based on the backup of the application data according to the configuration.

10. The method of claim 9, wherein the configuration comprises settings relating to selections of the resources, scheduling, and a merge policy for each phase of the phases.

11. The method of claim 10, wherein receiving the configuration for the multiphase restore process to restore the application to the destination platform comprises:
receiving user input comprising the selections of resources for each phase of the phases;
receiving user input comprising selections relating to the scheduling for each phase of the phases; and
receiving user input comprising selections relating to the merge policy for each phase of the phases, wherein the merge policy determines how the resources of each phase are to be restored at the destination platform.

12. The method of claim 11, wherein the merge policy comprises, for a given resource, a policy for restoring the given resource at the destination platform, wherein the policy comprises one of: overwrite, append, patch, and do not restore.

13. The method of claim 9, wherein validating the selected resources of the phase at the destination platform comprises testing resource connectivity, verifying resource data integrity, and verifying dependencies of the resource with respect to others of the resources of the application.

14. The method of claim 9, wherein capturing the backup of the application data of the application comprises:
generating a backup archive or snapshot of application data of the application; and
persisting the backup to one or more persistent volumes.

15. The method of claim 9, wherein the application is a containerized application executing on a Kubernetes cluster.
